# EUROPEAN PATENT SPECIFICATION

(11) **EP 2 572 854 B1**
(45) Date of publication and mention of the grant of the patent: **01.07.2020**
(21) Application number: 12006664.2
(22) Date of filing: 21.09.2012
(51) Int. Cl.: B29C 45/74, B29C 45/78

(54) **Injection molding machine**
Spritzgießmaschine
Machine de moulage à injection

(30) Priority: 22.09.2011 JP 2011208151
(43) Date of publication of application: 27.03.2013
(73) Proprietor: Sumitomo Heavy Industries, Ltd., Tokyo 141-6025 (JP)
(72) Inventor: Amano, Mitsuaki, Chiba-shi Chiba 263-0001 (JP); Yoshizawa, Nobuhiro, Chiba-shi Chiba 263-0001 (JP)
(74) Representative: Schmidbauer, Andreas Konrad

(56) References cited:
- EP-A1- 1 658 949
- DE-T5-112008 001 368
- DE-T5-112008 001 368
- JP-A- 4 164 622
- JP-A- 62 035 824
- JP-A- 2006 305 777

## Description

### BACKGROUND OF THE INVENTION

### 1. Field of the Invention

The present invention relates to an injection molding machine having a heating cylinder heated by plural heating parts.

### 2. Description of the Related Art

Conventionally, an injection molding machine including cylinder heaters, cylinder heater temperature sensors, a heater power supply device, and a control device, is known (see JP2002-79562). The cylinder heaters heat a heating cylinder. The cylinder heater temperature sensors detect temperatures of the respective cylinder heaters. The heater power supply device supplies electric power to the respective cylinder heaters. The control device controls the heater power supply device.

This control device switches set temperatures of all the cylinder heaters to a lowered temperature which is lower than a predetermined molding temperature, when a predetermined time has elapsed under a condition that all the cylinder heaters are at the predetermined molding temperature and the injection molding machine remains on standby. Subsequently, this control device entirely stops supplying electric power from the heater power supply device to the cylinder heaters when another predetermined time has elapsed under a condition where the injection molding machine remains on standby. In this way, the injection molding machine in JP2002-79562 reduces power consumption.

However, the injection molding machine in 79562 switches on or off all the cylinder heaters simultaneously. That means supplying electric power to the cylinder heaters which do not need to be maintained at the lowered temperature during lowered temperature operation. Thus, reduction of power consumption is insufficient.

JP 4 164622A teaches a method for preventing burning of a resin film in a molding machine at the time of reopening of operation wherein during a period until the reopening of the next injection molding a temperature of a heating cylinder is held at a temperature between the melting temperature and softening temperature of resin. The temperatures of the heaters are established in accordance with kinds of resin. In the case a malfunction appears, the cylinder is held between the melting point and softening point of the resin on the inside of a heating cylinder and repair is carried out. Even during a period of heat insulation temperature, temperature control by a PID control is performed. When the repair is completed, the heaters are raised to the molding temperature. JP 62 035824 A discloses a method to avoid deterioration of quality of a resin in a molding machine and to shorten the heat-up time after the completion of restoration from an abnormal condition. Under normal conditions, an injection molder is controlled at normal temperature, and under abnormal conditions the molder is controlled at a temperature lower than the normal temperatures. In a plurality of zones, temperatures are set by means of low temperature setters. When abnormal conditions occur, a central controller sends an abnormality signal to a temperature controller which automatically changes-over control of temperature from moldingtemperature setters to low temperature setters. As a result, the molder is controlled at temperatures lower than the normal temperatures. The heaters are feed-backcontrolled by turning ON and OFF so as to bring the temperature detected by temperature sensors to a certain fixed value at all times by comparing the detection data sent from the temperature sensors with the set data sent from the temperature setters. JP 2006 305777 A discloses a method to properly set the control temperature of a molding machine barrel at the time of temporary stop corresponding to a resin. The injection molding machine is constituted so that a barrel having a heater arranged on its outer peripheral part is provided and a molten resin is injected in a mold from the injection nozzle of the leading end part of the barrel. The injection molding machine is also equipped with a temperature control part for controlling the temperatures of the respective places of the rear part, intermediate part and front part of the barrel and a nozzle part to predetermined temperatures. A shift minus temperature setting memory in which a shift minus temperature for uniformly lowering the temperatures of the respective places is stored, a shift absolute value temperature setting memory in which a shift absolute value temperature for lowering the temperature of the respective places to definite temperatures and a selection means for selecting the lowering of the temperatures of the respective places by either one of the shift minus temperature and the shift absolute value temperature are provided. The temperature control part uses the temperatures selected by the selection means at the time of temporary stop of the injection molding machine to lower a control temperatures of the respective places.

### SUMMARY OF THE INVENTION

In consideration of the above, the present invention is intended to provide an injection molding machine which further reduces power consumption during lowered temperature.

To meet the above objective, an injection molding machine according to an embodiment of the present invention an injection molding machine according to claim 1 is provided.

### BRIEF DESCRIPTION OF THE DRAWINGS

FIG. 1 is a schematic diagram illustrating a configuration example of a temperature control system installed in an injection molding machine according to an embodiment of the present invention.
FIG. 2 is a diagram illustrating an example of a temperature setting screen.

### DETAILED DESCRIPTION OF THE PREFERRED EMBODIMENT

With reference to the drawings, embodiments of the present invention are described in the following.

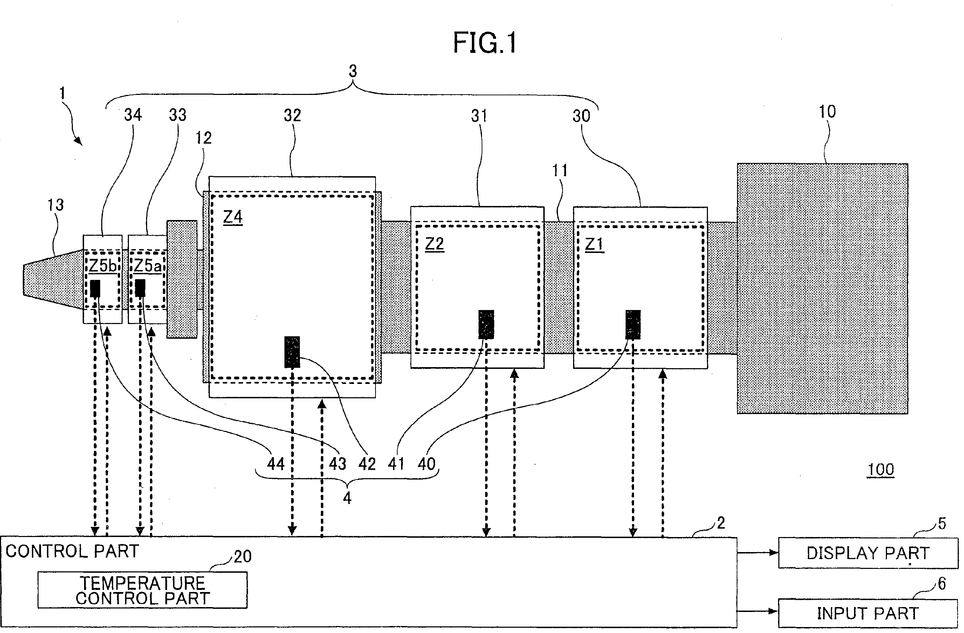

FIG. 1 is a schematic diagram illustrating a configuration example of a temperature control system 100 installed in an injection molding machine according to an embodiment of the present invention. In the embodiment, the temperature control system 100 measures a temperature of a heating cylinder 1 which is an object member to be heated, by using a temperature sensor 4 which is a temperature detecting part. On that basis, the temperature control system 100 controls a temperature of the heating cylinder 1 by using a band heater 3 which is a heating part.

The heating cylinder 1 houses a screw (not shown) rotationally and axially movable. The heating cylinder 1 is comprised mainly of a water-cooling cylinder part 10, a first cylindrical part 11, a second cylindrical part 12, and a nozzle part 13. The water-cooling cylinder part 10, the first cylindrical part 11, the second cylindrical part 12, and the nozzle part 13 are all made of metal and exchange heat among them. Resin is fed through a hopper (not shown) attached to the water-cooling cylinder part 10. Then, the resin is melted and plasticized in the heating cylinder 1. Then, the resin is fed toward the nozzle part 13 by the screw.

The temperature control system 100 is comprised mainly of a control part 2, the band heater 3, the temperature sensor 4, a display part 5, and an input part 6.

The control part 2 is configured to control movement of the temperature control system 100. For example, the control part 2 is a computer having a Central Processing Unit (CPU), a Random Access Memory (RAM), a Read-Only Memory (ROM), and the like. Specifically, the control part 2 reads out a program corresponding to a temperature control part 20 from the ROM, loads the program into the RAM, and causes the CPU to perform a process corresponding to the temperature control part 20.

The band heater 3 is an example of the heating part to heat the heating cylinder 1. In the embodiment, the band heater 3 includes two band heaters 30, 31 to heat the first cylindrical part 11, a band heater 32 to heat the second cylindrical part 12, and two band heaters 33, 34 to heat the nozzle part 13. The first cylindrical part 11 of the heating cylinder 1 has a first zone Z1 heated by the band heater 30 located near the water-cooling cylinder 10, and a second zone Z2 heated by the band heater 31 located near the second cylindrical part 12. The second cylindrical part 12 of the heating cylinder 1 constitutes a fourth zone Z4 heated by the band heater 32. The nozzle part 13 of the heating cylinder 1 has a fifth zone rear section Z5a heated by the band heater 33, and a fifth zone front section Z5b heated by the band heater 34.

The temperature control system 100 is also configured to control a temperature of a third zone Z3 which does not exist in the injection molding machine according to this embodiment but may exist in another injection molding machine according to the present invention. For example, the third zone Z3 may be located between the second zone and the fourth zone if the first cylindrical part 11 is elongated.

In the following, in accordance with respective zones to be heated, the band heaters. 30-34 are also referred to as a first zone band heater 30, a second zone band heater 31, a fourth zone band heater 32, a fifth zone rear section band heater 33, and a fifth zone front section band heater 34, respectively.

Also, the band heater 3 operates in response to a control, signal from the control part 2. For example, the band heater 3 is switched on and off in response to a Pulse Width Modulation (PWM) signal from the control part 2. If the band heater 3 is switched on, the band heater 3 receives electric power supply from a power source (not shown), and heats corresponding zones of the heating cylinder 1

The temperature sensor 4 is an example of the temperature detecting part to detect a temperature of the heating cylinder 1. For example, the temperature sensor 4 may be a thermocouple. In the embodiment, the temperature sensor 4 includes a first zone temperature sensor 40 to detect a temperature of the first zone Z1, a second zone temperature sensor 41 to detect a temperature of the second zone Z2, a fourth zone temperature sensor 42 to detect a temperature of the fourth zone Z4, a fifth zone rear section temperature sensor 43 to detect a temperature of the fifth zone rear section Z5a, and a fifth zone front section temperature sensor 44 to detect a temperature of the fifth zone front section Z5b. The temperature sensor 4 repeatedly outputs a detected value to the control part 2 at a predetermined frequency.

The display part 5 displays various pieces of information. For example, the display part 5 is a liquid crystal display mounted on the injection molding machine. The display part 5 may also be a separate device which can be connected to the injection molding machine.

The input part 6 is configured to allow a user to input various pieces of information into the injection molding machine. For example, the input part 6 is a touch panel attached to a surface of the display part 5. The input part 6 may also be other devices such as a keyboard, a mouse, a touch pad.

The temperature control part 20 in the control part 2 is configured to control a temperature of the heating cylinder 1 to a predetermined set temperature. For example, the temperature control part 20 controls the band heater 3 by PWM method based on a detected value of the temperature sensor 4.

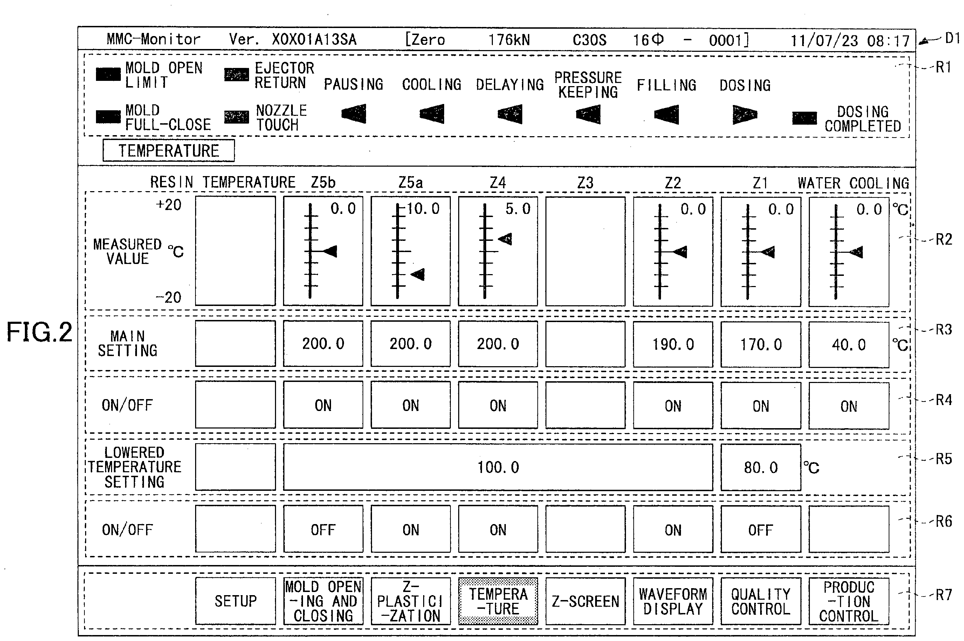

Referring to FIG. 2, a temperature control of the heating cylinder 1 by the temperature control part 20 will be described. FIG. 2 is a diagram illustrating an example of the temperature setting screen D1 displayed on the display part 5.

The temperature setting screen D1 is displayed to determine set temperatures of respective zones of the heating cylinder 1. The temperature setting screen D1 includes an indicator region R1, a measured value region R2, a main setting region R3, a main setting switching region R4, a lowered temperature setting region R5, a lowered temperature setting switching region R6, and a screen switching region R7. The user can call up the temperature setting screen D1 on the display part 5 at any time by manipulating through the input part 6.

The indicator region R1 allocates indicators corresponding to each of "MOLD OPEN LIMIT", "MOLD FULL-CLOSE", "EJECTOR RETURN", "NOZZLE TOUCH", "PAUSING", "COOLING", "DELAYING", "PRESSURE KEEPING", "FILLING", "DOSING", and "DOSING COMPLETED". The indicator region R1 shows a current state of the injection molding machine by turning on or off the indicators.

The measured value region R2 indicates, by a numerical value and a scale, a difference between set temperatures and measured temperatures of the temperature sensors corresponding to each of the water-cooling cylinder 10, the first zone Z1, the second zone Z2, the fourth zone Z4, the fifth zone rear section Z5a, and the fifth zone front section Z5b.

In the embodiment, the measured value region R2 shows the situation where measured temperatures of each of the water-cooling cylinder 10, the first zone Z1, the second zone Z2, and the fifth zone front section Z5b have reached corresponding set temperatures, a measured temperature of the fourth zone Z4 is higher than a corresponding set temperature by 5 degrees centigrade, and a measured temperature of the fifth zone rear section Z5a is lower than a corresponding set temperature by 10 degrees centigrade.

A temperature of the third zone Z3 and a resin temperature are not measured in the embodiment, and therefore are hided. The same goes for the measured value region R2, the main setting region R3, the main setting switching region R4, the lowered temperature setting region R5, and the lowered temperature setting switching region R6.

The main setting region R3 shows set temperatures of respective zones during molding operation. The user can adjust set temperatures of respective zones during molding operation through the input part 6 while looking at the main setting region R3.

In the embodiment, the main setting region R3 shows a situation where a set temperature of the water-cooling cylinder 10 is set at 40 degrees centigrade, a set temperature of the first zone Z1 is set at 170 degrees centigrade, a set temperature of the second zone is set at 190 degrees centigrade, set temperatures of each of the fourth zone Z4, the fifth zone rear section Z5a, and the fifth zone front section Z5b are set at 200 degrees centigrade.

The main setting switching region R4 shows "ON"/"OFF" states of temperature controls of respective zones during molding operation. The user can switch "ON"/"OFF" states of temperature controls of respective zones during molding operation through the input part 6 while looking at the main setting switching region R4. An "ON" state of a temperature control means that the temperature control part 20 controls power supply to the band heater 3 so that a temperature of a zone to be temperature-controlled can be maintained at its set temperature. An "OFF" state of a temperature control means that power supply to the band heater 3 is not performed.

In the embodiment, the main setting switching region R4 shows a situation where temperature controls of each of the water-cooling cylinder 10, the first zone Z1, the second zone Z2, the fourth zone Z4, the fifth zone rear section Z5a, and the fifth zone front section Z5b are switched to an "ON" state.

The lowered temperature setting region R5 shows set temperatures of respective zones during lowered temperature operation. The user can adjust set temperatures of respective zones during lowered temperature operation through the input part 6 while looking at the lowered temperature setting region R5.

The "during lowered temperature operation" refers to a situation where the heating cylinder 1 remains heated by supplying electric power to at least one of the band heaters when molding operation is not being performed.

In the embodiment, the lowered temperature setting region R5 shows a situation where a set temperature of the first zone Z1 is set at 80 degrees centigrade, set temperatures of each of the second zone Z2, the fourth zone Z4, the fifth zone rear section Z5a, and the fifth zone front section Z5b are set at 100 degrees centigrade.

In the embodiment, set temperatures of each of the second zone Z2, the fourth zone Z4, the fifth zone rear section Z5a, and the fifth zone front section Z5b are configured to be set collectively. However, they may be configured to be set individually as in the main setting region R3.

The lowered temperature setting switching region R6 shows "ON"/"OFF" states of temperature controls of respective zones during lowered temperature operation. The user can switch "ON"/"OFF" states of temperature controls of respective zones during lowered temperature operation through the input part 6 while looking at the lowered temperature setting switching region R6.

In the embodiment, the lowered temperature setting switching region R6 shows a situation where temperature controls of each of the water-cooling cylinder 10, the first zone Z1, and the fifth zone front section Z5b are switched to an "OFF" state, and temperature controls of each of the second zone Z2, the fourth zone Z4, and the fifth zone rear section Z5a are switched to an "ON" state.

A temperature control of a zone during lowered temperature operation is inhibited to be switched to an "ON" state if a corresponding temperature control in the main setting switching region R4 is at an "OFF" state, that is, if a temperature control during molding operation is at an "OFF" state. This is to avoid a temperature control during lowered temperature operation from being switched to an "ON" state, despite that a temperature control during molding operation is at an "OFF" state. For the same reason, if a temperature control of a specific zone during molding operation is switched to an "OFF" state, the temperature control system 100 may switch a temperature control of the specific zone during lowered temperature operation to an "OFF" state automatically.

The screen switching region R7 shows software buttons for switching to various screens including "SETUP", "MOLD OPENING AND CLOSING", "Z-PLASTICIZATION", "Z-SCREEN", "WAVEFORM DISPLAY", "QUALITY CONTROL", and "PRODUCTION CONTROL". A hatched software button "TEMPERATURE" represents that the temperature setting screen D1 is being selected.

If a temperature control of a zone is at an "ON" state, regardless of whether during molding operation or during lowered temperature operation, the temperature control part 20 supplies electric power to a band heater corresponding to the zone. Then, the temperature control part 20 controls a temperature of the zone so that the temperature reaches a set temperature while monitoring a detected value of a temperature sensor corresponding to the zone continuously.

Specifically, if a detected value of a temperature sensor corresponding to a zone is lower than a set temperature of the zone, the temperature control part 20 switches on a band heater corresponding to the zone. Also, if a detected value of a temperature sensor corresponding to a zone is higher than a set temperature of the zone, the temperature control part 20 switches off a band heater corresponding to the zone. In the former case, the temperature control part 20 may increase a duty ratio of a PWM signal to the band heater corresponding to the zone with increase in difference between the set temperature and the detected value of the temperature sensor which is lower than the set temperature, in order to increasean increasing rate of temperature.

In contrast, if a temperature control of a zone is at an "OFF" state, regardless of whether during molding operation or during lowered temperature operation, the temperature control part 20 stops supplying electric power to a band heater corresponding to the zone.

According to settings in FIG. 2, during lowered temperature operation, the temperature control part 20 stops supplying electric power to the first zone band heater 30 corresponding to the first zone Z1 and the fifth zone front section band heater 34 corresponding to the fifth zone front section Z5b.

Specifically, the temperature control part 20 stops supplying electric power to a band heater which is at an "OFF" state when the injection molding machine stops molding operation and starts lowered temperature operation. The temperature control part 20 may stop supplying electric power to a band heater when a predetermined time has elapsed after the start of the lowered temperature operation. Alternatively, the temperature control part 20 may stop supplying electric power to a band heater when a temperature of a zone corresponding to the band heater has decreased to a predetermined temperature after the start of the lowered temperature operation. The injection molding machine automatically stops molding operation and automatically starts the lowered temperature operation. However, the injection molding machine may start the lowered temperature operation when a lowered temperature button (not shown) realized by a software button or a hardware button is pressed by the user.

From the above configuration, the temperature control system 100 allows the user to set whether to supply electric power to band heaters corresponding to respective zones during molding operation and during, lowered temperature operation separately. Thus, the temperature control system 100 can stop supplying electric power to a band heater corresponding to a specific zone during lowered temperature operation, and can reduce power consumption during lowered temperature operation.

For example, the specific zone includes the first zone Z1 or the fifth zone front section Z5b. This is because, in the first zone Z1 adjacent to the water-cooling cylinder part 10, resin therewithin is not melted even during molding operation, and thus the resin does not deteriorates in quality even if the temperature control system 100 stops the lowered temperature operation. Also, this is because, in the fifth zone front section Z5b adjacent to a mold device (not shown), resin retained therewithin is small in amount even during molding operation, and thus the resin is less likely to deteriorate in quality even if the temperature control system 100 stops the lowered temperature operation.

As above, preferred embodiments of the present invention are described in detail. However, the present invention is not limited to the above embodiments. Various modifications and substitutions may be applied to the above embodiments without departing from the scope of the present invention.

For example, in the above embodiments, the temperature control system 100 allows the user to individually switch "ON"/"OFF" states of temperature controls of respective zones during lowered temperature operation as shown in the lowered temperature setting switching region R6 on the temperature setting screen D1. However, the temperature control system 100 may allow the user to collectively switch "ON"/"OFF" states of temperature controls of plural zones. Specifically, the temperature control system 100 may group "ON"/"OFF" states of temperature controls of the second zone Z2, the third zone Z3, and the fourth zone Z4 into one "ON"/"OFF" state. Similarly, the temperature control system 100 may group "ON"/"OFF" states of temperature controls of the first zone Z1 and the fifth zone front section Z5b into one "ON"/"OFF" state.

Also, instead of or in addition to the above, the temperature control system 100 may provide a power saving setting item (not shown) which can switch an "ON"/"OFF" state. In this case, if the power saving setting item is at an "ON" state, the temperature control system 100 stops supplying electric power to a band heater corresponding to a specific zone during lowered temperature operation. From this configuration, the temperature control system 100 can achieve a similar effect to a case where a temperature control of a specific zone is switched to an "OFF" state individually.

Also, in the above embodiments, the temperature control system 100 shows one each of the main setting region R3, the main setting switching region R4, the lowered temperature setting region R5, and the lowered temperature setting switching region R6 on the temperature setting screen D1 so that the temperature control system 100 can store one temperature setting. However, the temperature control system 100 may be configured to store plural temperature settings in order to cope with an environment where plural resin materials are used in one injection molding machine. In this case, the user sets temperature settings corresponding to each of the plural resin materials beforehand. Thus, the user can reduce power consumption during lowered temperature operation while achieving lowered temperature conditions suitable for each of the plural resin materials.

Also, the temperature control system 100 uses a band heater as the heating part to heat respective zones of the heating cylinder 1. However, the heating part is not limited to a band heater. For example, the temperature control system 100 may use a heating device which locates around respective zones a pipe conduit for circulating a heated fluid. In this case, the temperature control part 20 controls temperatures of respective zones by adjusting a temperature or a flow rate of the heated fluid.

## Claims

1. An injection molding machine, comprising:
a heating cylinder (1) comprising a plurality of zones (Z1, Z2, Z4, Z5a, Z5b);
a plurality of heating parts (3, 30, 31, 32, 33, 34), each for heating a respective one of said zones, such that the heating cylinder (1) is heatable by the plurality of heating parts (3, 30, 31, 32, 33, 34);
a control part (2, 20) configured to individually control whether or not to supply electric power to each of at least two heating parts of the plurality of heating parts (3, 30, 31, 32, 33, 34) during lowered temperature operation;
temperature sensors (4, 40, 41, 42, 43, 44) corresponding to the zones; and
an input part (6) configured to allow a user to input information into the injection molding machine;
wherein the control part (2, 20) performs temperature controls of the zones (Z1, Z2, Z4, Z5a, Z5b) during molding operation and during lowered temperature operation;
wherein the temperature controls are switchable between an on-state and an off-state during molding operation and during lowered temperature operation through the input part (6);
wherein the injection molding machine is adapted such that:
(a) the temperature controls during molding operation as well as during lowered temperature operation, in the on-state, are adapted such that the control part (2, 20) supplies electric power to the heating part (3, 30, 31, 32, 33, 34), corresponding to the respective zone and then the control part (2, 20) controls the temperature of the respective zone so that the temperature reaches a set temperature while monitoring a detected value of the temperature sensor (4, 40, 41, 42, 43, 44) corresponding to the zone continuously; and
(b) the temperature controls during molding operation as well as during lowered temperature operation, in the off-state, do not control the temperature of the zones such that no electric power is supplied to the heating part (3, 30, 31, 32, 33, 34) of the corresponding zone;
**characterized in that**
a main setting switching region (R4) is provided to show "ON"/"OFF" states of temperature controls of the respective zones (Z1, Z2, Z4, Z5a, Z5b) during molding operation, and
a lowered temperature setting switching region (R6) is provided to show "ON"/"OFF" states of temperature controls of the respective zones (Z1, Z2, Z4, Z5a, Z5b) during lowered temperature operation.

## Patentansprüche

1. Spritzgussmaschine, die Folgendes aufweist:
einen Heizzylinder (1), der eine Vielzahl von Zonen (Z1, Z2, Z4, Z5a, Z5b) aufweist;
eine Vielzahl von Heizteilen (3, 30, 31, 32, 33, 34), jeweils zum Heizen einer jeweiligen einen der Zonen, so dass der Heizzylinder (1) durch die Vielzahl von Heizteilen (3, 30, 31, 32, 32, 33, 34) beheizbar ist;
einen Steuerteil (2, 20), der konfiguriert ist, um in individueller Weise zu steuern, ob elektrische Leistung an jeden der mindestens zwei Heizteile der Vielzahl von Heizteilen (3, 30, 31, 32, 33, 34) während eines Betriebs mit abgesenkter Temperatur geliefert werden soll oder nicht;
Temperatursensoren (4, 40, 41, 42, 43, 44), die den Zonen entsprechen; und
einen Eingabeteil (6), der konfiguriert ist, um es einem Nutzer zu gestatten, Informationen in die Spritzgussmaschine einzugeben;
wobei der Steuerteil (2, 20) Temperatursteuerungen der Zonen (Z1, Z2, Z4, Z5a, Z5b) während des Gussbetriebs und des Betriebs mit abgesenkter Temperatur steuert;
wobei die Temperatursteuerungen während des Gussbetriebs und während des Betriebs mit abgesenkter Temperatur durch den Eingabeteil (6) zwischen einem AN-Zustand und einem AUS-Zustand umschaltbar sind;
wobei die Spritzgussmaschine so ausgebildet ist, dass:
(a) die Temperatursteuerungen während des Gussbetriebs genauso wie während des Betriebs mit abgesenkter Temperatur im AN-Zustand so ausgebildet sind, dass der Steuerteil (2, 20) elektrische Leistung an den Heizteil (3, 30, 31, 32, 33, 34) liefert, welcher der jeweiligen Zone entspricht, und dann der Steuerteil (2, 20) die Temperatur der jeweiligen Zone so steuert, dass die Temperatur eine eingestellte Temperatur erreicht, während ein detektierter Wert des Temperatursensors (4, 40, 41, 42, 43, 44) entsprechend der Zone in kontinuierlicher Weise überwacht wird; und
(b) die Temperatursteuerungen während des Gussbetriebs genauso wie während des Betriebs mit abgesenkter Temperatur im AUS-Zustand nicht die Temperatur der Zonen steuern, so dass keine elektrische Leistung zu dem Heizteil (3, 30, 31, 32, 33, 34) der entsprechenden Zone geliefert wird;
**dadurch gekennzeichnet, dass**
ein Haupteinstellumschaltbereich (R4) so vorgesehen ist, dass er "AN"/"AUS"-Zustände der Temperatursteuerungen der jeweiligen Zonen (Z1, Z2, Z4, Z5a, Z5b) während des Gussbetriebs steuert und
ein Schaltbereich (R6) für die Einstellung mit abgesenkter Temperatur so vorgesehen ist, dass er "AN"/"AUS"-Zustände der Temperatursteuerungen der jeweiligen Zonen (Z1, Z2, Z4, Z5a, Z5b) während des Betriebs mit abgesenkter Temperatur zeigt.

## Revendications

1. Machine de moulage à injection comprenant :
un cylindre chauffant (1) comprenant une pluralité de zones (Z1, Z2, Z4, Z5a, Z5b) ;
une pluralité de parties chauffantes (3, 30, 31, 32, 33, 34), chacune destinée à chauffer une zone respective parmi lesdites zones, de sorte que le cylindre chauffant (1) peut être chauffé par la pluralité de parties chauffantes (3, 30, 31, 32, 33, 34) ;
une partie de commande (2, 20) configurée pour contrôler individuellement s'il faut fournir ou non de l'énergie électrique à chacune d'au moins deux parties chauffantes parmi la pluralité de parties chauffantes (3, 30, 31, 32, 33, 34) pendant un fonctionnement à température réduite ;
des capteurs de température (4, 40, 41, 42, 43, 44) correspondant aux zones ; et
une partie d'entrée (6) configurée pour permettre à un utilisateur d'entrer des informations dans la machine de moulage à injection ;
dans laquelle la partie de commande (2, 20) met en œuvre des commandes de température des zones (Z1, Z2, Z4, Z5a, Z5b) pendant le fonctionnement de moulage et pendant le fonctionnement à température réduite ;
dans laquelle les commandes de température sont commutables entre un état actif et un état inactif pendant le fonctionnement de moulage et pendant le fonctionnement à température réduite au moyen de la partie d'entrée (6) ;
dans laquelle la machine de moulage à injection est adaptée de sorte que :
(a) les commandes de température pendant le fonctionnement de moulage ainsi que pendant le fonctionnement à température réduite, dans l'état actif, sont adaptées de sorte que la partie de commande (2, 20) fournit de l'énergie électrique à la partie chauffante (3, 30, 31, 32, 33, 34), correspondant à la zone respective, puis la partie de commande (2, 20) commande la température de la zone respective de sorte que la température atteint une température fixée tout en surveillant en continu une valeur détectée du capteur de température (4, 40, 41, 42, 43, 44) correspondant à la zone ; et
(b) les commandes de température pendant le fonctionnement de moulage ainsi que pendant le fonctionnement à température réduite, dans l'état inactif, ne commandent pas la température des zones de sorte qu'aucune énergie électrique n'est fournie à la partie chauffante (3, 30, 31, 32, 33, 34) de la zone correspondante ;
**caractérisée en ce que**
une région de commutation de réglage principale (R4) est prévue pour montrer des états "ON"/"OFF" des commandes de température des zones respectives (Z1, Z2, Z4, Z5a, Z5b) pendant le fonctionnement de moulage, et
une région de commutation de réglage de température réduite (R6) est prévue pour montrer des états "ON"/"OFF" des commandes de température des zones respectives (Z1, Z2, Z4, Z5a, Z5b) pendant le fonctionnement à température réduite.
